# FASCICULE DE BREVET EUROPEEN

(11) **EP 2 331 853 B1**
(45) Date de publication et mention de la délivrance du brevet: **20.08.2014**
(21) Numéro de dépôt: 09783908.8
(22) Date de dépôt: 09.10.2009
(51) Int. Cl.: F16J 15/14, B01J 3/03, F16L 23/16

(54) **JOINT COMPOSITE DEFORMABLE POUR PORTEES A FORT DEFAUT DE PLANEITE**
VERFORMBARE VERBUNDDICHTUNG FÜR LAGERFLÄCHEN MIT GROSSEM EBENHEITSFEHLER
DEFORMABLE COMPOSITE SEAL FOR BEARING SURFACES WITH A GREAT LACK OF FLATNESS

(30) Priorité: 10.10.2008 FR 0856879
(43) Date de publication de la demande: 15.06.2011
(73) Titulaire: Commissariat à l'Énergie Atomique et aux Énergies Alternatives, 75015 Paris (FR); Technetics Group France SAS, 42000 Saint-Etienne (FR)
(72) Inventeur: GUIMET, Laurent, 42240 Unieux (FR); JULIAA, Jean-François, 26200 Montelimar (FR); LEFRANCOIS, Michel, 42000 Saint Etienne (FR); PARSY, Sophie, 42600 Savigneux (FR)
(74) Mandataire: Ilgart, Jean-Christophe
(86) Numéro de dépôt international: PCT/EP2009/063199
(87) Numéro de publication internationale: WO 2010/040836

(56) Documents cités:
- EP-A- 0 079 448
- EP-A- 0 100 228
- FR-A- 2 190 317
- JP-A- 58 163 864
- US-A- 4 468 043

## Description

Le sujet de cette invention est un joint composite déformable pour des portées à fort défaut de planéité.

On cherche à transmettre une pression de contact suffisante entre les portées et le joint, cette pression devant être aussi uniforme que possible. Une pression minimale est requise pour assurer l'étanchéité du joint. Or l'étanchéité peut aussi être compromise par les défauts de planéité des portées si le joint est trop rigide pour s'y adapter, l'uniformité de la pression étant perdue. De plus, le contact d'un joint rigide avec les portées dépourvues de planéité peut produire des pressions locales excessives, notamment si les portées sont en matériaux fragiles. C'est par exemple le cas des brides émaillées, pour lesquelles la norme allemande DIN 28 007-2, par exemple, autorise jusqu'à 8 millimètres de défaut de planéité pour des brides de diamètre compris entre 1000 et 2000 millimètres.

Les joints usuels sont ainsi soit trop rigides en produisant des pressions excessives ou au contraire des défauts d'étanchéité sur des surfaces non planes, soit trop souples, incapables d'appliquer une pression de contact adéquate.

Les joints en élastomère peuvent donner satisfaction dans certains cas, mais sont détruits à température élevée ou en présence de certains fluides à étancher. Leur emploi n'est donc pas universel. Certains, notamment creux ou gonflables, sont de toute façon trop souples pour transmettre suffisamment d'effort sur les portées.

Un autre genre de joint d'étanchéité connu consiste en une enveloppe de PTFE (polytétrafluoroéthylène) contenant un ressort ondulé assurant le contact de l'enveloppe sur la portée ou les portées. Un exemple est donné dans DE-U-89 14536. Le PTFE résiste à la plupart des fluides et résout donc une insuffisance des joints en élastomère vis-à-vis de la compatibilité chimique avec les fluides du processus. Un inconvénient est que le ressort ondulé est incapable d'appliquer une pression uniforme sur les portées déformées.

L'homme de l'art sait perfectionner de tels joints en insérant entre le ressort et l'enveloppe des cales en fibres d'aramide, par exemple, d'épaisseur plus ou moins forte selon l'amplitude des défauts de planéité locaux. Une pression relativement uniforme de contact est alors obtenue, mais le procédé n'est pas fiable et il est long à mettre en oeuvre. Il est de toute façon douteux que des résultats satisfaisants soient obtenus avec des grands défauts de planéité. De telles conceptions sont décrites dans DE-A-36 01346 ou DE-A-195 39761. On doit encore citer le document US-A-5 558 347 dans lequel la partie élastique du joint est composée de deux ressorts ondulés soudés entre eux emplis de gaz sous pression. Cette conception plus compliquée contribue à diminuer l'hétérogénéité de la pression de contact, sans l'éliminer complètement. Le texte indique d'ailleurs que ce type d'étanchéité est d'abord destiné aux brides émaillées de diamètre inférieur à 213 millimètres.

Le document US-A-4 9961 891 décrit un joint plat en matériau PTFE cellulaire, ayant donc une grande compressibilité. La structure étant toutefois poreuse, elle ne peut pas être admise avec certains fluides dangereux, et le joint est difficile à nettoyer.

Le document EP-0100 228 décrit un joint composé d'une masse à haute viscosité, pouvant éventuellement être sous forme de poudre ou de granulés avant une transformation physique, quand le matériau est thermoplastique, afin de mieux s'ajuster aux faces extrêmes du joint ; mais aucune transmission d'efforts n'est envisagée pour ce joint qui n'est pas conçu pour servir sous pression.

Le document FR-A-2 190 317 qui semble être la conception la plus proche de l'invention concerne un joint d'isolation sonore pour des surfaces fortement irrégulières comme le pourtour d'une oreille humaine. Le contact du joint avec ces surfaces se fait par l'intermédiaire d'un sac imperméable à l'air en forme de bourrelet fermé sur lui-même et empli de billes y circulant en glissant les unes sur les autres. Le sac peut se déformer et épouser la forme de la surface en contact. Un tel joint n'est pourtant pas non plus apte à être appliqué avec une pression uniforme puisque ses capacités de transmission d'effort entre les portées restent trop limitées.

La présente invention représente un joint perfectionné et satisfaisant à la fois aux nécessités d'être assez déformable pour s'adapter à des défauts de planéité importants mais rigide pour appliquer une pression de contact suffisante. Pour résumer, elle concerne un joint selon la revendication 1.

Le "fluide granuleux" est diphasique, il est constitué de l'air ambiant susceptible de traverser la paroi du sac, ou plus généralement de gaz, et de capables de glisser les unes par rapport aux autres. Enfin, le sac est mobile dans l'enveloppe.

L'emplissage partiel du sac par le fluide granuleux signifie qu'un volume d'air subsiste à l'intérieur du sac en plus des interstices entre les grains empilés. Comme toutefois le sac est poreux, une partie de ce volume d'air peut disparaître si la compression du joint est assez grande pour réduire suffisamment son volume interne. Les grains constitutifs du fluide jouissent d'une grande mobilité dans le sac tant qu'un volume d'air y subsiste : ils glissent donc facilement jusqu'à s'adapter à des défauts de planéité importants. Quand le volume d'air a disparu, la transmission de pression s'effectue par le contact des billes, qui résistent à des pressions de contact importantes grâce à leur rigidité et à la stabilité de leur assemblage, mais une faculté de glissement subsiste, qui permet d'ajuster jusqu'à la fin des différences de pressions excessives d'un point à l'autre du joint. La mobilité du sac dans l'enveloppe favorise la bonne répartition des billes et leur écoulement entre les portées du joint.

Une certaine élasticité du sac peut être tolérée voire préférée pour lui permettre de s'étendre en réponse aux efforts et de favoriser encore le glissement des grains. Une élasticité plus grande est toutefois déconseillée puisque le joint deviendrait trop souple. C'est pourquoi un sac essentiellement inextensible peut aussi être proposé. S'il est élastique et donc extensible, il peut être renforcé de fils ou d'autres portions en matière essentiellement inextensible s'étendant dans une seule direction du sac, pour permettre l'extension seulement dans l'autre direction.

Des éléments rigides, tels que des rondelles, peuvent aussi être disposés près du sac, pour servir de renforts locaux au sac, ou limiter ses déplacements et déformations pour le rendre localement complètement rigide.

Le fonctionnement du joint est amélioré si l'enveloppe est en PTFE, sur lequel le sac glisse facilement. Dans un mode de réalisation plus particulièrement favorable, l'enveloppe est en PTFE restructuré formé d'une bande roulée sur elle-même pour enclore le sac.

L'invention sera maintenant décrite en liaison aux figures 1, 2 et 3, qui représentent respectivement :
- la figure 1, une coupe de transversale du joint à l'état libre,
- la figure 2, une coupe transversale du joint à l'état comprimé,
- et la figure 3, le joint en vue du dessus.

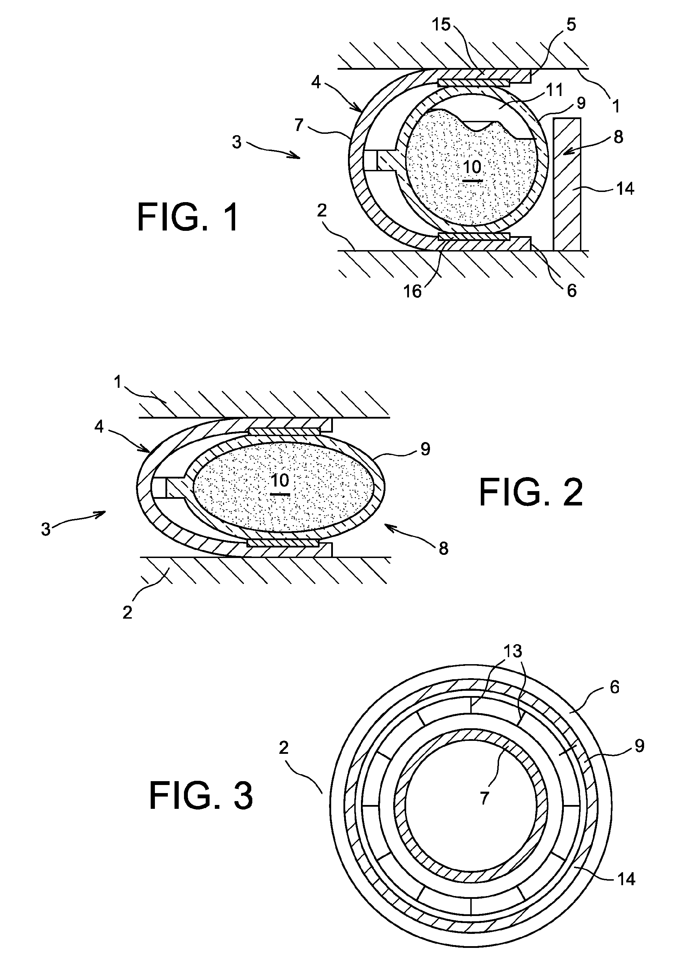

Deux portées 1 et 2 sont opposées et parallèles d'après la figure 1, et le joint 3 est intercalé entre elles. Il comprend une enveloppe 4 en PTFE restructuré à section en forme de C, composée de deux lèvres 5 et 6 respectivement en appui sur les portées 1 et 2 et d'une portion de liaison 7 courbée joignant les lèvres 5 et 6. L'enveloppe 4 contient une âme 8 composée d'un sac 9 de section approximativement circulaire à un état libre garnie d'un fluide granuleux 10; un volume d'air 11 subsiste toutefois dans le sac 9 tant qu'il n'est pas comprimé.

Le sac 9 est déformable, poreux à l'air, et peu ou pas extensible. Pour retenir les grains 10, il est complètement fermé et les pores sont plus petits que les grains 10. Il peut être en une matière tissée ou tricotée. Quand une compression est appliquée au joint 3 par le rapprochement des portées 1 et 2, l'état de la figure 2 est obtenu. L'enveloppe 4 s'est déformée, et l'âme 8 est comprimée entre les lèvres 5 et 6. Le volume d'air 11 a disparu, évacué par les pores du sac 9, et la garniture des grains 10 s'étend d'une portée 1 à l'autre 2 par le seul intermédiaire des lèvres 5 et 6 et du sac 9. Comme ces éléments sont déformables, l'état de la figure 2 est respecté pour toutes les sections de l'assemblage, malgré des écartements différents d'un endroit à l'autre entre les lèvres 1 et 2. Des glissements des grains atténuent ou éliminent les variations locales de pression. La matière du sac 9 est maintenant tendue, permettant à la pression interne transmise par les grains 10 de se développer. Le joint de l'invention peut être un joint circulaire de forme classique, tel qu'on le représente à la figure 3, sans que d'autres formes soient exclues.

Un exemple d'application de ce joint concerne un réacteur chimique émaillé constitué d'une cuve surmontée d'un couvercle. Le joint 3 est disposé entre eux pour établir l'étanchéité. Les conditions de température sont entre les limites de -60°C et +250°C. La pression interne au réacteur peut être comprise entre 0 bar absolu (le vide) et 7 bars absolus. L'enveloppe est constituée d'un matériau PTFE restructuré produit par la société Garlock et de marque Gylon style 3 504, et le sac 9 est en tissu en polyacrylonitrile. Les grains sont des petites billes en acier. Du lubrifiant peut être ajouté au fluide diphasique gaz-solide.

Certaines possibilités d'amélioration seront maintenant décrites. On a vu qu'une élasticité exagérée du sac 9 était déconseillée. L'élasticité naturelle peut être réduite en le renforçant de fils ou de fibres 13 inextensibles. Il est possible de les ajouter dans une direction seulement, par exemple la direction de circonférence des sections, ce qu'on a représenté à la figure 3. Un aplatissement excessif de l'âme 8 et une réduction de la pression transmise sont alors évités, mais une élasticité plus grande est maintenue en direction tangentielle du joint 3 pour faciliter les mouvements des billes d'une section du sac 9 à une autre d'après les inégalités d'écartement des portées 1 et 2.

Des déformations excessives de l'âme 8, ou des aplatissements excessifs des sections du sac 9, peuvent être évités par des obstacles appropriés, comme une rondelle 14 cylindrique entourant le joint 3. Une autre rondelle cylindrique, non représentée, pourrait être disposée de l'autre côté du sac 9. D'autres rondelles 15 et 16, encore plates, peuvent être intercalées entre le sac 9 et les lèvres 5 et 6. Elles doivent répartir localement la pression spécifique pour aider le joint 3 à s'adapter aux grandes déformations des portées 1 et 2. Par ses propriétés d'élasticité, chacune des rondelles 15 et 16 peut aider à compenser un fluage possible de la lèvre 5 ou 6 correspondante ; d'autres éléments élastiques pourraient être intercalés entre l'enveloppe 4 et l'âme 8 avec le même effet. Toutefois, le PTFE restructuré ayant une structure non cellulaire, il a aussi une tenue au fluage améliorée. Les rondelles 15 et 16 peuvent aussi être réalisées en matériau plus dur pour répartir plus régulièrement la poussée des grains.

## Revendications

1. Joint (3) comprenant une enveloppe déformable (4) et une âme (8) contenue dans l'enveloppe, l'âme étant formée d'un sac souple et d'un fluide granuleux (10) contenu dans le sac (9), **caractérisé en ce que** le fluide granuleux est un mélange de gaz et de billes rigides, que le sac est poreux à l'air et seulement empli en partie par les billes, et qu'il est mobile dans l'enveloppe.

2. Joint selon la revendication précédente, caractérisé en que la poussée des grains est répartie sur les portées à étancher via des rondelles intercalaires (15 et 16) insérées entre le sac et l'enveloppe.

3. Joint selon la revendication 1, **caractérisé en ce que** le sac (9) est en une matière tissée ou tricotée.

4. Joint selon la revendication 1 ou 2, **caractérisé en ce que** le sac (9) possède une élasticité limitée et permet des réaménagements de disposition des grains par des glissements suivant le périmètre ou la longueur du sac.

5. Joint selon l'une quelconque des revendications précédentes, **caractérisé en ce que** le glissement entre les grains (10) est facilité par un lubrifiant.

6. Joint selon la revendication 4, **caractérisé en ce qu'**il comprend des fils (13) de matière essentiellement inextensible dans une seule direction du sac (9).

7. Joint selon l'une quelconque des revendications précédentes, **caractérisé en ce qu'**il comprend des éléments rigides (14) disposés près du sac (9) pour limiter ses déplacements.

8. Joint selon la revendication 7, **caractérisé en ce que** les éléments sont des rondelles entourant le sac.

9. Joint selon l'une quelconque des revendications précédentes, **caractérisé en ce que** l'enveloppe est en PTFE.

10. Joint selon l'une quelconque des revendications précédentes, **caractérisé en ce que** l'enveloppe est une bande de PTFE restructuré enroulée sur elle-même.

## Patentansprüche

1. Dichtung (13), eine verformbare Hülle (4) und einen in der Hülle enthaltenen Kern (8) umfassend, wobei der Kern durch einen nachgiebigen Sack und ein in dem Sack (9) enthaltenes körniges Fluid (10) gebildet wird,
**dadurch gekennzeichnet, dass** das körnige Fluid eine Mischung aus Gas und steifen Kügelchen ist, dass der Sack luftdurchlässig und nur teilweise mit den Kügelchen gefüllt ist, und dass er in der Hülle beweglich ist.

2. Dichtung nach dem vorhergehenden Anspruch, **dadurch gekennzeichnet, dass** der Druck der Körner über die Zwischenscheiben (15 und 16), eingefügt zwischen dem Sack und der Hülle, auf die abzudichtenden Auflageflächen verteilt wird.

3. Dichtung nach Anspruch 1, **dadurch gekennzeichnet, dass** der Sack (9) aus einem gewebten oder gestrickten Material ist.

4. Dichtung nach Anspruch 1 oder 2, **dadurch gekennzeichnet, dass** der Sack (9) eine begrenzte Elastizität aufweist und Neuanordnungen bzw. Neuverteilungen der Körner durch Gleitbewegungen längs des Umfangs oder der Länge des Sacks ermöglicht.

5. Dichtung nach einem der vorhergehenden Ansprüche, **dadurch gekennzeichnet, dass** das Gleiten zwischen den Körnern (10) durch ein Gleitmittel erleichter wird.

6. Dichtung nach Anspruch 4, **dadurch gekennzeichnet, dass** sie Schnüre bzw. Fasern (13) aus im Wesentlichen in nur einer Richtung des Sacks (9) undehnbarem Material umfasst.

7. Dichtung nach einem der vorhergehenden Ansprüche, **dadurch gekennzeichnet, dass** sie steife Elemente (14) umfasst, angeordnet nahe beim Sack (9), um seine Verschiebungen zu begrenzen.

8. Dichtung nach Anspruch 7, **dadurch gekennzeichnet, dass** die Elemente den Sack umgebende runde Scheiben bzw. Ringe sind.

9. Dichtung nach einem der vorhergehenden Ansprüche, **dadurch gekennzeichnet, dass** die Hülle aus PTFE ist.

10. Dichtung nach einem der vorhergehenden Ansprüche, **dadurch gekennzeichnet, dass** die Hülle ein restrukturiertes auf sich selbst aufgewickeltes PTFE-Band ist.

## Claims

1. Seal (3) comprising a deformable envelope (4) and a core (8) contained in the envelope, the core being formed of a flexible sack and a granular fluid (10) contained in the sack (9), **characterised in that** the granular fluid is a mixture of gas and rigid balls, that the sack is air-permeable and only filled in part by the balls, and that it is moveable in the envelope.

2. Seal according to the previous claim, **characterised in that** the pushing force of the grains is spread out on the bearing surfaces that are to be sealed via intercalary discs (15 and 16) inserted between the sack and the envelope.

3. Seal according to claim 1, **characterised in that** the sack (9) is made of a woven or knitted material.

4. Seal according to claim 1 or 2, **characterised in that** the sack (9) has a limited elasticity and enables layout readjustments of the grains by sliding along the perimeter or the length of the sack.

5. Seal according to any one of the previous claims, **characterised in that** the sliding between the grains (10) is facilitated by a lubricant.

6. Seal according to claim 4, **characterised in that** it comprises threads (13) of essentially inextensible material in a single direction of the sack (9).

7. Seal according to any one of the previous claims, **characterised in that** it comprises rigid components (14) arranged near to the sack (9) to limit its movements.

8. Seal according to claim 7, **characterised in that** the components are discs surrounding the sack.

9. Seal according to any one of the previous claims, **characterised in that** the envelope is made of PTFE.

10. Seal according to any one of the previous claims, **characterised in that** the envelope is a strip of restructured PTFE rolled upon itself.
